# EUROPÄISCHE PATENTSCHRIFT

(11) **EP 2 108 545 B1**
(45) Veröffentlichungstag und Bekanntmachung des Hinweises auf die Patenterteilung: **04.05.2011**
(21) Anmeldenummer: 09153058.4
(22) Anmeldetag: 18.02.2009
(51) Int. Cl.: B60R 9/04

(54) **Anordnung zur Befestigung eines Profils, insbesondere eines Hohlprofils, an einem Fahrzeugdach**
Assembly for attaching a profile, in particular a hollow profile, to a vehicle roof
Agencement de fixation d'un profilé, notamment d'un profilé creux, sur un toit de véhicule

(30) Priorität: 09.04.2008 DE 102008017859
(43) Veröffentlichungstag der Anmeldung: 14.10.2009
(73) Patentinhaber: JAC Products Europe GmbH, 42285 Wuppertal (DE)
(72) Erfinder: Kolodziej, Klaus, 42329, Wuppertal (DE)
(74) Vertreter: Christophersen, Ulrich Rudolf

(56) Entgegenhaltungen:
- EP-A- 0 950 569
- EP-A- 1 705 066
- DE-U1-202004 018 079

## Beschreibung

Die Erfindung betrifft eine Anordnung zur Befestigung eines Profils, insbesondere eines Hohlprofils, an einem Fahrzeugdach im Bereich eines unterhalb der Dachhaut verlaufenden Dachrahmens, wobei sich die Profilbasis zumindest im Bereich um die Anordnung herum gegen die Dachhaut abstützt, und sich ein gegenüber dem Dachrahmen festgelegter Schraubeinsatz durch eine Öffnung in der Dachhaut hindurch bis in das Profil hinein erstreckt, und dort zum Zwecke der Befestigung in dem Profil mit einem Gewindeabschnitt versehen ist.

Eine Anordnung mit diesen Merkmalen ist aus der DE 29 39 671 A1 bekannt. Sie dient der Befestigung einer Dachreling für einen Fahrzeug-Dachgepäckträger. Als Schraubeinsatz dient ein Bolzen, der an seinem der Dachreling abgewandten Ende mit einem Gewinde zum Aufschrauben einer an dem Dachrahmen abgestützten Gewindemutter versehen ist. Ferner weist der Bolzen einen verdickten Bund auf, dessen Länge in etwa auf jenes Maß abgestimmt ist, welches im Allgemeinen zwischen dem Dachrahmen und der Außenseite der Dachhaut des Fahrzeugesdaches einzuhalten ist. So soll dem Umstand Rechnung getragen werden, dass in der Praxis der Abstand zwischen der Dachhaut und dem unterhalb verlaufenden Dachholm Toleranzen aufweist, was Probleme bei der Befestigung einer Dachreling mit sich bringt.

Eine hinsichtlich des Toleranzausgleichs verbesserte Konstruktion ist aus der DE 31 21 086 C2 bekannt, jedoch ist die Befestigung der Dachreling insgesamt umständlich und viele Montageschritte. Zudem sind die Befestigungsanordnungen nach der DE 29 39 671 A1 und der DE 31 21 086 C2 nur für die Befestigung einer Dachreling geeignet, welche sich mittelbar über zusätzliche Stützfüße auf dem Fahrzeugdach abstützt. Zunehmende Verbreitung finden jedoch Dachträgersysteme aus direkt, d.h. im Wesentlichen abstandslos auf dem Fahrzeugdach angeordneten Profilen und insbesondere Hohlprofilen.

EP1705066 A1 beschreibt ein Befestigungsanordung gemäß den Oberbegriff des Anspruchs 1.

Der Erfindung liegt die **Aufgabe** zugrunde, eine einfach zu montierende Anordnung zur Befestigung eines Profils und insbesondere Hohlprofils zu schaffen, welche sich auch für solche Dachträgersysteme eignet, bei denen das Profil unter Verzicht auf zusätzliche Stützfüße direkt auf dem Fahrzeugdach angeordnet ist.

Zur **Lösung** dieser Aufgabe wird für eine Anordnung mit den eingangs angegebenen Merkmalen vorschlagen, dass der Gewindeabschnitt des Schraubeinsatzes mit einer in das Profil einsetzbaren und von oben her auf der Profilbasis abgestützten Gewindeplatte verschraubt ist, und dass der Schraubeinsatz mit einer zylindrischen Bohrung zur Aufnahme eines radial wirkenden Klemmelements sowie mit für das Ansetzen eines externen Schraubwerkzeuges geeigneten Angriffsflächen versehen ist.

Die Befestigung des Profils auf dem Fahrzeugdach erfolgt also mittels einer Gewindeplatte, welche sich von oben her auf der Profilbasis des zu befestigenden Profils abstützt. Die Gewindeplatte ist mit einem Innengewinde versehen, in welches der Außengewindeabschnitt des sich durch die Öffnung in der Dachhaut hindurchführenden Schraubeinsatzes eingreift. Zur Festlegung des so mit dem Profil verbundenen Schraubeinsatzes gegenüber dem unterhalb angeordneten Dachrahmen befindet sich in dem Schraubeinsatz eine zylindrische Bohrung. Diese nimmt ein radial wirkendes Klemmelement auf, welches den Schraubeinsatz gegenüber dem Dachrahmen verankert. Die Montage des Schraubeinsatzes wird vereinfacht, indem dieser mit Angriffsflächen versehen ist. Diese erlauben das Ansetzen eines externen Schraubwerkzeuges, wie etwa eines mit passenden Werkzeugflächen versehenen Schraubendrehers, wodurch ein besonders schnelles und bequemes Verbinden des drehbaren Schraubeinsatzes mit der drehfest in das Profil eingesetzten Gewindeplatte möglich wird. Ferner erlauben die an dem Schraubeinsatz angeformten Angriffsflächen ein erhöhtes Anzugsmoment beim Einschrauben des Schraubeinsatzes,

Mit einer Ausgestaltung der Anordnung wird vorgeschlagen, dass die Angriffsflächen für den Ansatz des externen Schraubwerkzeuges in einem in Verlängerung zu der zylindrischen Bohrung ausgebildeten Hohlraum des Schraubeinsatzes angeordnet sind. Bevorzugt wird hierbei eine Ausgestaltung derart, dass diese Angriffsflächen durch einen unrunden, vorzugsweise vierkantigen Querschnitt dieses Hohlraums gebildet sind.

Gemäß einer weiteren Ausführungsform können die Angriffsflächen oder auch weitere Angriffsflächen auch außen an dem Schraubeinsatz ausgebildet sein, wo zu dessen Montage ebenfalls ein passendes externes Schraubwerkzeug ansetzbar ist.

Ferner wird vorgeschlagen, dass die Gewindeplatte gegen Verdrehung gesichert in das Profil eingesetzt ist. Zu diesem Zweck ist von Vorteil, wenn die Gewindeplatte eine unrunde Form aufweist und sie infolge dieser unrunden Gestaltung unverdrehbar in dem Profil sitzt. Auf diese Weise wird bei der Montage der Anordnung vermieden, dass während des Einschraubens und Anziehens des Schraubeinsatzes zugleich eine Konterung der Gewindeplatte erfolgen muss.

Mit einer weiteren Ausgestaltung wird vorgeschlagen, dass der Schraubeinsatz einen Längsabschnitt aufweist, dessen Durchmesser gegenüber dem Durchmesser im Außengewindeabschnitt radial erweitert ist, und dass die Profilbasis zwischen diesem radial erweiterten Längsabschnitt und der Unterseite der Gewindeplatte eingespannt ist. Bei dieser Ausführungsform befindet sich der radial erweiterte Längsabschnitt mit nur geringem Spiel in der Öffnung der Dachhaut, wodurch der Schraubeinsatz auf einfache Weisung eine Zentrierung in Bezug auf die Dachhaut erfährt.

Mit einer weiteren Ausgestaltung wird vorgeschlagen, dass das radial wirkende Klemmelement als Spreizhülse ausgebildet ist. Durch diese Spreizhülse hindurch erstreckt sich, wie dies auch in der EP 0 950 569 A1 beschrieben ist, ein drehgesicherter Bolzen, der an seinem durch eine Öffnung in dem Dachrahmen hindurchführenden Ende mit einem Gewinde zum Aufschrauben einer von unten gegen den Dachrahmen abgestützten Gewindemutter versehen ist. Das als Spreizhülse ausgebildete Klemmelement ist durch eine aus einer Schraubbetätigung der Gewindemutter resultierende Axialverschiebung des Bolzens innerhalb der zylindrischen Bohrung aufspreizbar und radial gegen diese klemmbar.

Zur Drehsicherung des Bolzens kann dieser an seinem anderen Ende unrund gestaltet sein. Zum Beispiel kann er mit diesem Ende unverdrehbar, jedoch axial beweglich in einem korrespondierenden Hohlraum des Schraubeinsatzes sitzen, wobei der Hohlraum vorzugsweise in Verlängerung zu der zylindrischen Bohrung ausgebildet ist.

Ferner wird vorgeschlagen, dass zur Aufspreizung des Klemmelements daran und/oder an dem Bolzen ein Konus ausgebildet ist. Durch eine Axialbewegung des Bolzens bewirkt ein solcher Konus ein Aufspreizen des Klemmelements, wodurch sich dieses radial gegen die zylindrische Bohrung des Schraubeinsatzes presst und zu einer dauerhaften Axialfixierung der Befestigungsanordnung führt.

Schließlich wird vorgeschlagen, das Klemmelement mit dem Schraubeinsatz lösbar zu verkleben, vorzugsweise über ein doppelseitiges Klebeelement. Auf diese Weise lässt sich, noch vor Anordnung des Profils auf dem Fahrzeugdach, die Baueinheit aus Bolzen und radial aufspreizbarem Klemmelement vorläufig in dem Schraubeinsatz sichern. Beim späteren Ziehen an dem freien Gewindeende des Bolzens, etwa mittels der dort aufzuschraubenden Gewindemutter, löst sich die Verklebung, um sodann durch weiteres Anziehen der Gewindemutter die dauerhafte Verankerung des Profils am Fahrzeugdach vorzunehmen.

Ausführungsbeispiele einer Anordnung zur Befestigung eines Hohlprofils an einem Fahrzeugdach werden im Folgenden anhand der zugehörigen Zeichnungen beschrieben. Auf der Zeichnung zeigen:
- Figur 1: eine perspektivische Ansicht eines Fahrzeugdachs eines Pkws mit zwei darauf befestigten Hohlprofilen;
- Figur 2: einen Schnitt durch das Fahrzeugdach im Bereich des Hohlprofils einschließlich der Anordnung zur Befestigung des Profils, wobei die Gegenstände während der Montage des Profils dargestellt sind;
- Figur 3: die Anordnung nach Figur 2, nach Abschluss der Montage;
- Figur 4: eine Einzelheit der Anordnung nach Figur 2, jedoch noch ohne Bolzen, Klemmelement und Gewindemutter;
- Figur 5: eine zweite Ausführungsform der Anordnung, dargestellt in einem der Figur 2 entsprechenden Montagestadium und
- Figur 6: die Anordnung nach Figur 5, nach Abschluss der Montage.

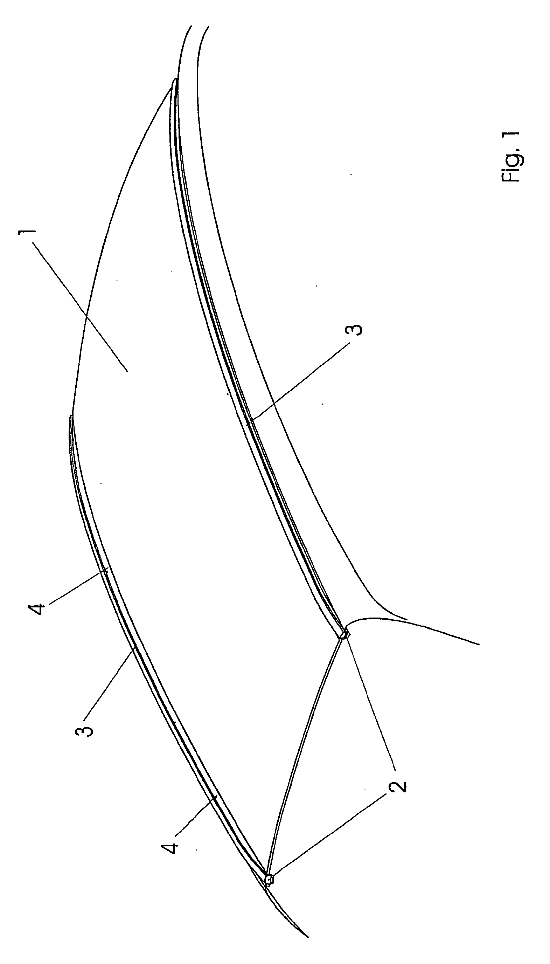

Figur 1 zeigt das Fahrzeugdach eines Pkws mit zwei darauf jeweils in Fahrzeuglängsrichtung verlaufenden Hohlprofilen 3. Derartige Profile werden auch als "Dachreling" bezeichnet. Eine herkömmliche Dachreling stützt sich an zwei oder drei Stellen über Stützfüße auf der Dachhaut des Fahrzeugdachs ab und verläuft außerhalb dieser Stützfüße in einem gewissen Abstand zur Dachhaut. Bei der hier beschriebenen Anordnung hingegen befinden sich die Profile 3 über ihre gesamte Länge direkt auf der Dachhaut 1, allenfalls kann sich zwischen der Unterseite des Profils 3 und der Dachhaut noch eine geeignete Dichtung befinden.

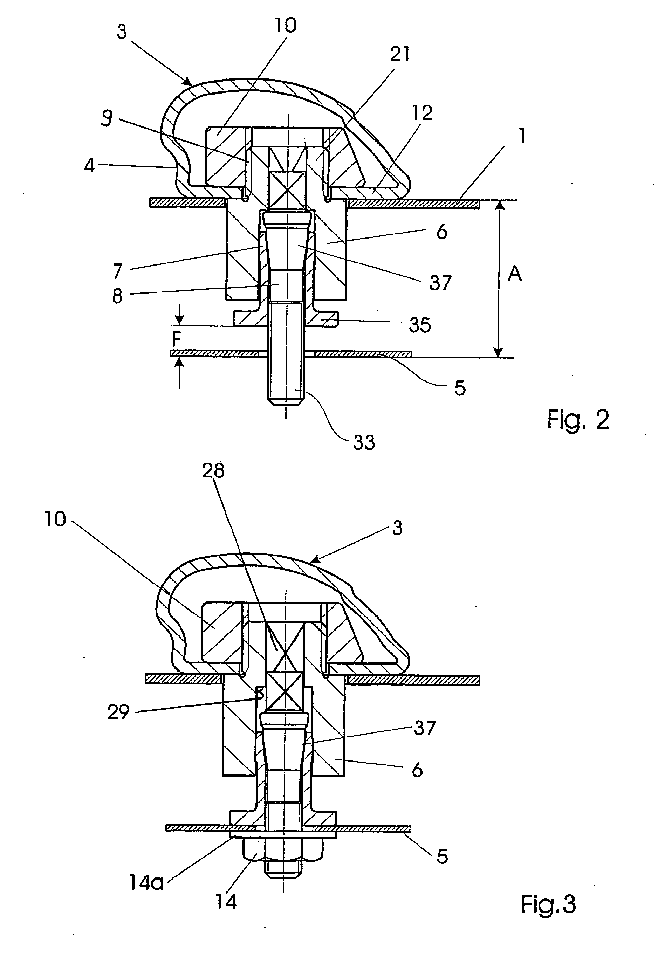

Um an den Hohlprofilen Anbauteile, wie z.B. Dachgepäckträger, Skiträger, Fahrradträger etc. befestigen zu können, weisen die Hohlprofile 3 entlang ihrer aufeinander zugerichteten Längsseiten zumindest vereinzelte Hinterschneidungen oder Einsenkungen 4 (Figur 2) auf, in welche Befestigungselemente des jeweiligen Trägersystems form- oder reibschlüssig eingreifen können, um so das jeweilige Trägersystem auf dem Fahrzeugdach zu sichern.

Gemäß den Figuren 2 und 3 sind die Profile 3 als Hohlprofile gestaltet, welche nach oben und zu den Seiten hin vollständig geschlossen sind. Die auf der Dachhaut 1 angeordnete Profilbasis 12 des Profils ist im Wesentlichen flach und eben gestaltet und mit Öffnungen versehen, durch die die im Folgenden noch im Einzelnen beschriebene Befestigungsanordnung hindurchführt. Über die Länge der Hohlprofile 3 betrachtet sind mehrere dieser Befestigungsanordnungen vorgesehen, um so das Hohlprofil 3 über dessen gesamte Länge sicher auf der Dachhaut 1 abzustützen. Zwischen der Profilbasis 12 des Hohlprofils 3 und der Oberseite der Dachhaut 1 kann, um ein Eindringen von Feuchtigkeit zu vermeiden, noch eine Dichtung oder Dichtungsschicht angeordnet sein.

Zur Verankerung des Hohlprofils auf dem Fahrzeugdach wird nicht alleine die Dachhaut 1 herangezogen, sondern es wird hierzu die erhöhte Steifigkeit eines unterhalb der Dachhaut 1 verlaufenden Fahrzeug-Dachrahmens 5 ausgenutzt. Dieser Dachrahmen ist häufig ein geschlossenes Profil mit entsprechend hoher Festigkeit. Der Abstand A zwischen Dachhaut 1 und Dachrahmen 5 ist jedoch produktionstechnisch bedingt nicht stets exakt gleich, sondern weist gewisse Schwankungen auf. Daher ist bei der Verankerung des Hohlprofils an dem unterhalb angeordneten Dachrahmen 5 ein Toleranzausgleich erforderlich. Die beschriebene Anordnung vermag einen solchen Toleranzausgleich auf montagetechnisch einfache Art durchzuführen.

Die in Figur 2 in einem Zwischenstadium und in Figur 3 nach Abschluss der Montage dargestellte Anordnung zur Befestigung des Hohlprofils 3 setzt sich zusammen aus einem Schraubeinsatz 6, einer Gewindeplatte 10, einem als Spreizhülse ausgebildeten Klemmelement 7, einem Bolzen 8 sowie einer auf den Bolzen aufschraubbaren Gewindemutter 14 mit Unterlegscheibe 14a.

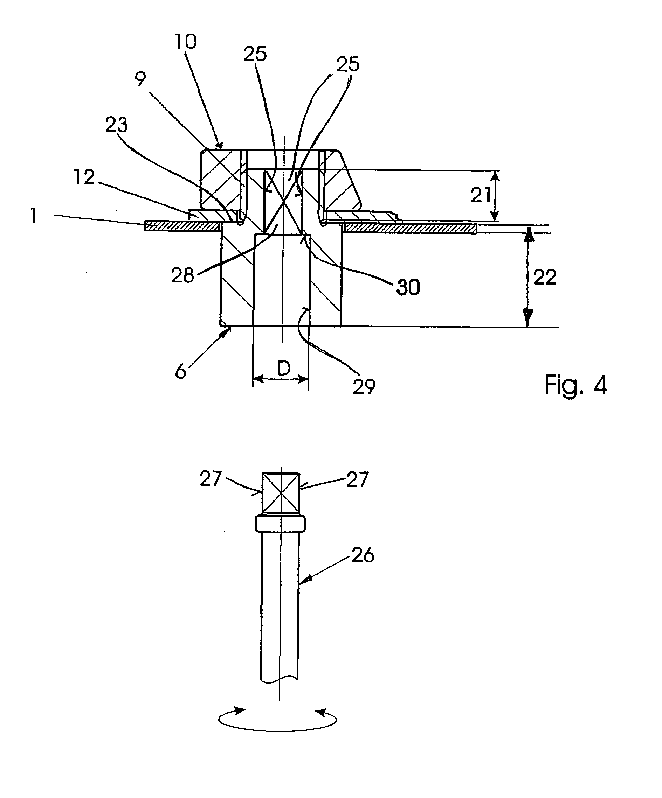

In Bezug auf den ersten Teil der Montage wird im Folgenden anhand Figur 4 die Verbindung und das Zusammenwirken des Schraubeinsatzes 6 mit der Gewindeplatte 10 beschrieben. In Figur 4 sind die weiteren Bestandteile der Anordnung, d. h. das Klemmelement, der Bolzen und die Gewindemutter, nicht dargestellt. Der Schraubeinsatz 6 weist in Längsrichtung im Wesentlichen zwei Abschnitte auf, nämlich einen Gewindeabschnitt 21 mit einem daran ausgebildeten Außengewinde sowie einen weiteren Längsabschnitt 22. Der Durchmesser des Längsabschnitts 22 ist, wie Figur 4 erkennen lässt, gegenüber dem Durchmesser im Gewindeabschnitt 21 radial erweitert. Hierbei ist die Anordnung des Schraubeinsatzes 6 dergestalt, dass dieser sowohl durch die Öffnung in der Dachhaut 1 als auch durch die hierzu im Wesentlichen koaxiale Öffnung in der Profilbasis 12 hindurchführt. Allerdings ist der Durchmesser des Schraubeinsatzes 6 auf seinem Längsabschnitt 22 größer, als die Weite der Öffnung in der Profilbasis 12. Auf diese Weise sitzt der Längsabschnitt 22 zwar mit wenig Spiel in der Öffnung der Dachhaut 1, zugleich jedoch stützt sich der Schraubeinsatz 6 im Bereich seiner Stufe 23 von unten her gegen die Profilbasis 12 ab.

Mit dem Gewindeabschnitt 21 des Schraubeinsatzes 6 in Gewindeverbindung 9 steht die Gewindeplatte 10. Diese stützt sich mit ihrer Unterseite von innen her an der Profilbasis 12 ab. Wird daher der Schraubeinsatz 6 in Bezug auf die Gewindeplatte 10 angezogen, wird der umgebende Bereich der Profilbasis 12 zwischen dem radial erweiterten Längsabschnitt 22 des Schraubeinsatzes 6 und der Unterseite der Gewindeplatte 10 eingespannt. Um die Gewindeverbindung 9 entsprechend anzuziehen, wird der Schraubeinsatz 6 in die drehfest gesicherte Gewindeplatte 10 eingeschraubt und ausreichend fest angezogen. Um hierbei ein Mitdrehen der Gewindeplatte 10 zu vermeiden, ist diese gegen Verdrehung gesichert in das Hohlprofil 3 eingesetzt. Hierzu ist die Gewindeplatte 10 unrund in der Weise gestaltet, dass sie sich partiell gegen die Innenwandung des einen asymmetrischen Querschnitt aufweisenden Profils 3 abstützt, und sie sich daher nicht zu drehen vermag.

Zum Einschrauben und Anziehen des Schraubeinsatzes 6 ist dieser mit Angriffsflächen 25 für ein externes Schraubwerkzeug 26 versehen (Figur 4), welches mit korrespondierenden Werkzeugflächen 27 versehen ist. Bei dem hier beschriebenen Ausführungsbeispiel bilden die Angriffsflächen 25 und die hierzu korrespondierenden Werkzeugflächen 27 des Schraubwerkzeuges 26 einen Innen- bzw. Außenvierkant. Figur 4 lässt erkennen, dass sich die Angriffsflächen 25 an den Innenflächen eines Hohlraums 28 mit Vierkant-Querschnitt befinden. Der Hohlraum 28 erstreckt sich über einen Teil der Gesamtlänge des Schraubeinsatzes 6, wohingegen der andere Teil der Gesamtlänge durch eine zylindrische Bohrung 29 eingenommen wird. Der vierkantige Hohlraum 28 und die zylindrische Bohrung 29 fluchten zueinander und bilden gemeinsam eine durchgehende Öffnung in dem buchsenförmig gestalteten Schraubeinsatz 6. Zudem ist die Mittelachse der zylindrischen Bohrung 29 und des Hohlraums 28 koaxial zur Längsachse des Schraubeinsatzes 6 insgesamt. Der Durchmesser D der zylindrischen Bohrung 29 ist größer als der Quermesser im Bereich des Vierkants 28, so dass sich im Übergang von der zylindrischen Bohrung 29 in den Vierkant 28 eine Stufe 30 ergibt.

Gemäß den Figuren 2 und 3 ist in die zylindrische Bohrung 29 des Schraubeinsatzes 6 das als Spreizhülse ausgebildete Klemmelement 7 von unten her eingesetzt. Durch das Klemmelement 7 hindurch führt der lang gestreckte Bolzen 8. Dieser führt mit seinem dem Hohlprofil 3 abgewandten Ende durch eine Öffnung in dem Dachrahmen 5 hindurch. Auf diesem Längsbereich ist der Bolzen 8 mit einem Gewinde 33 versehen, auf welches die Gewindemutter 14 aufschraubbar ist, wobei sich nach Abschluss der Montage die Gewindemutter 14, ggf. unter Zwischenlage der Unterlegscheibe 14 a, von unten her gegen den stabilen Dachrahmen 5 abstützt (Figur 3).

Der Bolzen 8 ist in Bezug auf den Schraubeinsatz 6 axial beweglich, jedoch nicht verdrehbar. Zu diesem Zweck ist der Bolzen 8 an seinem bis in den Vierkant 28 des Schraubeinsatzes 6 hineinreichenden Ende mit einer geeigneten Drehsicherung versehen, z. B. einem Vierkant.

Das Klemmelement 7 weist einen buchsen- oder hülsenförmigen Längsabschnitt sowie, bereits außerhalb des Schraubeinsatzes 6, einen radial erweiterten Flansch 35 auf. Zum Aufspreizen des Klemmelements 7 ist dieses als Spreizhülse mit einzelnen, durch Längsschlitze getrennten Spreizsegmenten gestaltet. Um die für das Aufspreizen erforderliche Aufweitung zu erzielen, weisen die Außenseite des Bolzens 8 sowie die Innenwandung der Spreizhülse 7 jeweils konische Flächen auf. Je nach Bauart ist es auch möglich, einen Konus nur am Umfang des Bolzens 8 oder nur an der Innenseite der Spreizhülse 7 vorzusehen. Infolge der konischen Gestaltung der Kontaktflächen von Bolzen 8 und Spreizhülse 7 kommt es im Falle einer axialen Relativbewegung zwischen Bolzen 8 und Spreizhülse 7 zu einem radialen Aufweiten der Segmente der Spreizhülse, wodurch sich diese gegen die zylindrische Bohrung 29 des Schraubeinsatzes 6 pressen.

Figur 2 zeigt den Ausgangszustand bei der Montage, in welchem Zustand die Spreizhülse 7 noch lose in der zylindrischen Bohrung 29 des Schraubeinsatzes 6 sitzt. Wird nun auf das Gewinde 33 die Gewindemutter 14 mit der Unterlegscheibe 14 a aufgesetzt und angezogen, werden zunächst Bolzen 8 und Spreizhülse 7 gemeinsam nach unten bewegt, bis der in dem Zustand nach Figur 2 noch bestehende Freiraum F zwischen der Unterseite des Flansches 35 und der Oberseite des Dachrahmens 5 zu Null wird. Erst dann führt ein weiteres Anziehen der Gewindemutter 14 zu einer axialen Relativbewegung zwischen Bolzen 8 und Spreizhülse 7, wodurch letztere sich aufweitet und reibschlüssig von innen her gegen die zylindrische Bohrung 29 des Schraubeinsatzes 6 presst. In diesem Zustand ist das Hohlprofil 3 dann dauerhaft gegenüber Dachhaut 1 und Dachrahmen 5 verankert.

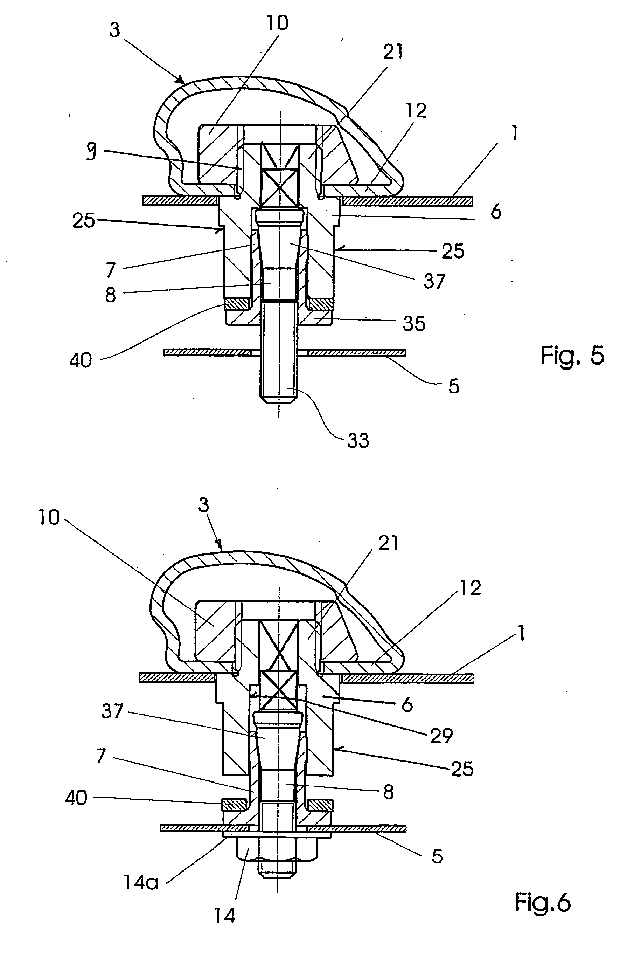

In den Figuren 5 und 6 ist eine zweite Ausführungsform der Anordnung dargestellt. Bei dieser Ausführungsform befinden sich zusätzliche Angriffsflächen 25 für ein Schraubwerkzeug außen an dem Schraubeinsatz 6. Zu diesem Zweck befinden sich im Bereich der äußeren Mantelfläche des Schraubeinsatzes 6 Schlüsselflächen 25, die z.B. insgesamt eine Vierkantform oder Sechskantform aufweisen.

Im vormontierten Zustand, wie er in Figur 5 dargestellt ist, sind Bolzen 8 und Klemmelement 7 - vorläufig - mit dem Schraubeinsatz 6 verbunden. Zu diesem Zweck befindet sich zwischen der Stirnfläche des Schraubeinsatzes 6 und der Oberseite des Flansches 35 ein doppelseitiges Klebeband 40. Dieses verhindert, dass während der Vormontage nach Figur 5, d. h. beim Hindurchstecken der Baueinheit durch die vorgesehenen Öffnungen in Dachhaut 1 und Dachrahmen 5, das Klemmelement 7 und der Bolzen 8 aus dem Schraubeinsatz 6 herausfallen. Erst durch Anziehen des Bolzens 8 mittels der Gewindemutter 14 (Figur 6) löst sich das Klebeband 40, welches dann nicht mehr benötigt wird.

### Bezugszeichenliste

- 1: Dachhaut
- 3: Profil, Dachreling
- 4: Hinterschneidung, Einsenkung
- 5: Dachrahmen
- 6: Schraubeinsatz
- 7: Klemmelement, Spreizhülse
- 8: Bolzen
- 9: Gewindeverbindung
- 10: Gewindeplatte
- 12: Profilbasis
- 14: Gewindemutter
- 14 a: Unterlegscheibe
- 21: Gewindeabschnitt
- 22: Längsabschnitt
- 23: Stufe
- 25: Angriffsfläche
- 26: Schraubwerkzeug
- 27: Werkzeugfläche
- 28: Hohlraum
- 29: zylindrische Bohrung
- 30: Stufe
- 33: Gewinde
- 35: Flansch
- 37: Konus
- 40: Klebeband

- A: Abstand
- D: Durchmesser
- F: Freiraum

## Patentansprüche

1. Anordnung zur Befestigung eines Profils (3), insbesondere eines Hohlprofils, an einem Fahrzeugdach im Bereich eines unterhalb der Dachhaut (1) verlaufenden Dachrahmens (5), wobei sich die Profilbasis (12) zumindest im Bereich um die Anordnung herum gegen die Dachhaut (1) abstützt, und sich ein gegenüber dem Dachrahmen (5) festgelegter Schraubeinsatz (6) durch eine Öffnung in der Dachhaut (1) hindurch bis in das Profil (3) hinein erstreckt und dort zum Zwecke der Befestigung in dem Profil mit einem Gewindeabschnitt (21) versehen ist,
**dadurch gekennzeichnet,**
**dass** der Gewindeabschnitt (21) des Schraubeinsatzes (6) mit einer in das Profil (3) einsetzbaren und von oben her auf der Profilbasis (12) abgestützten Gewindeplatte (10) verschraubt ist, und dass der Schraubeinsatz (6) mit einer zylindrischen Bohrung (29) zur Aufnahme eines radial wirkenden Klemmelements (7) sowie mit für das Ansetzen eines externen Schraubwerkzeuges geeigneten Angriffsflächen (25) versehen ist.

2. Anordnung nach Anspruch 1,
**dadurch gekennzeichnet,**
**dass** die Angriffsflächen (25) in einem in Verlängerung zu der zylindrischen Bohrung (29) ausgebildeten Hohlraum (28) des Schraubeinsatzes (6) angeordnet sind.

3. Anordnung nach Anspruch 2,
**dadurch gekennzeichnet,**
**dass** die Angriffsflächen (25) durch einen unrunden, vorzugsweise vierkantigen Querschnitt des Hohlraums (28) gebildet sind.

4. Anordnung nach Anspruch 2 oder 3,
**dadurch gekennzeichnet,**
**dass** der Schraubeinsatz (6) in Längsrichtung mit einer durchgehenden Öffnung versehen ist, deren Längsabschnitte durch die zylindrische Bohrung (29) und den Hohlraum (28) gebildet werden.

5. Anordnung nach Anspruch 1,
**dadurch gekennzeichnet,**
**dass** die Angriffsflächen (25) oder weitere Angriffsflächen (25) außen an dem Schraubeinsatz (6) ausgebildet sind.

6. Anordnung nach einem der vorangehenden Ansprüche,
**dadurch gekennzeichnet,**
**dass** die Gewindeplatte (10) gegen Verdrehung gesichert in das Profil (3) eingesetzt ist.

7. Anordnung nach Anspruch 6,
**dadurch gekennzeichnet,**
**dass** die Gewindeplatte (10) infolge ihrer unrunden Gestaltung unverdrehbar in dem Profil (3) sitzt.

8. Anordnung nach einem der vorangehenden Ansprüche,
**dadurch gekennzeichnet,**
**dass** der Schraubeinsatz (6) einen gegenüber dem Durchmesser im Gewindeabschnitt (21) radial erweiterten Längsabschnitt (22) aufweist, und dass die Profilbasis (12) zwischen diesem Längsabschnitt (22) und der Unterseite der Gewindeplatte (10) eingespannt ist.

9. Anordnung nach Anspruch 8,
**dadurch gekennzeichnet,**
**dass** sich der radial erweiterte Längabschnitt (22) in der Öffnung der Dachhaut (1) befindet und so den Schraubeinsatz (6) in Bezug auf die Dachhaut (1) zentriert.

10. Anordnung nach einem der vorangehenden Ansprüche,
**dadurch gekennzeichnet,**
**dass** das radial wirkende Klemmelement (7) als Spreizhülse ausgebildet ist, durch die hindurch sich ein gegenüber dem Schraubeinsatz (6) drehgesicherter Bolzen (8) erstreckt, der an seinem durch eine Öffnung in dem Dachrahmen (5) hindurchführenden Ende mit einem Gewinde (33) zum Aufschrauben einer von unten gegen den Dachrahmen (5) abgestützten Gewindemutter (14) versehen ist, wobei das Klemmelement (7) durch eine aus einer Schraubbetätigung der Gewindemutter (14) resultierende Axialverschiebung des Bolzens (8) innerhalb der zylindrischen Bohrung (29) aufspreizbar und radial gegen diese klemmbar ist.

11. Anordnung nach Anspruch 10,
**dadurch gekennzeichnet,**
**dass** zur Drehsicherung des Bolzens (8) dieser teilweise unrund gestaltet ist und axial beweglich in einem korrespondierend unrunden Hohlraum (28) des Schraubeinsatzes (6) sitzt, wobei der Hohlraum (28) in Verlängerung zu der zylindrischen Bohrung (29) ausgebildet ist.

12. Anordnung nach Anspruch 10 oder 11,
**dadurch gekennzeichnet,**
**dass** zur Aufspreizung des Klemmelements (7) daran und/oder an dem Bolzen (8) ein Konus (37) ausgebildet ist.

13. Anordnung nach einem der vorangehenden Ansprüche,
**dadurch gekennzeichnet,**
**dass** das Klemmelement (7) mit dem Schraubeinsatz (6) lösbar verklebt ist, vorzugsweise über ein doppelseitiges Klebeelement (40).

## Claims

1. An arrangement for fastening a profile (3), in particular a hollow profile, to a vehicle roof in the region of a roof frame (5) extending below the roof skin (1), wherein the profile base (12) is supported against the roof skin (1) at least in the region around the arrangement, and a screwed insert (6) fixed with respect to the roof frame (5) extends through an opening in the roof skin (1) into the profile (3) and is provided with a threaded portion (21) there for the purpose of fastening in the profile, **characterized in that** the threaded portion (21) of the screwed insert (6) is screwed to a threaded plate (10) capable of being inserted into the profile (3) and supported from above on the profile base (12), and the screwed insert (6) is provided with a cylindrical bore (29) for receiving a clamping element (7) acting radially and with engagement faces (25) suitable for the attachment of an external screw tool.

2. An arrangement according to claim 1, **characterized in that** the engagement faces (25) are arranged in a cavity (28) formed as an extension to the cylindrical bore (29) in the screwed insert (6).

3. An arrangement according to claim 2, **characterized in that** the engagement faces (25) are formed by a non-round, preferably square, cross-section of the cavity (28).

4. An arrangement according to claim 2 or 3, **characterized in that** the screwed insert (6) is provided in the longitudinal direction with a continuous opening, the longitudinal portions of which are formed by the cylindrical bore (29) and the cavity (28).

5. An arrangement according to claim 1, **characterized in that** the engagement faces (25) or further engagement faces (25) are formed on the outside of the screwed insert (6).

6. An arrangement according to any one of the preceding claims, **characterized in that** the threaded plate (10) is inserted into the profile (3) in a manner preventing turning.

7. An arrangement according to claim 6, **characterized in that** the threaded plate (10) is mounted in the profile (3) in a non-rotatable manner on account of its non-round shape.

8. An arrangement according to any one of the preceding claims, **characterized in that** the screwed insert (6) has a longitudinal portion (22) enlarged radially with respect to the diameter in the threaded portion (21), and the profile base (12) is clamped between this longitudinal portion (22) and the underside of the threaded plate (10).

9. An arrangement according to claim 8, **characterized in that** the radially enlarged longitudinal portion (22) is situated in the opening in the roof skin (1) and thus centres the screwed insert (6) with respect to the roof skin (1).

10. An arrangement according to any one of the preceding claims, **characterized in that** the radially acting clamping element (7) is designed in the form of an expansion sleeve through which extends a pin (8) which is prevented from rotating with respect to the screwed insert (6) and which at its end passing through an opening in the roof frame (5) is provided with a thread (33) for screwing on a threaded nut (14) supported from below against the roof frame (5), wherein the clamping element (7) is capable of being expanded inside the cylindrical bore (29) by an axial displacement of the pin (8) resulting from a screw actuation of the threaded nut (14) and is capable of being clamped radially against said cylindrical bore (29).

11. An arrangement according to claim 10, **characterized in that** in order to prevent the pin (8) from rotation it is made non-round in part and is mounted in an axially movable manner in a correspondingly non-round cavity (28) in the screwed insert (6), wherein the cavity (28) is formed as an extension to the cylindrical bore (29).

12. An arrangement according to claim 10 or 11, **characterized in that** in order to expand the clamping element (7) a cone (37) is formed on it and/or on the pin (8).

13. An arrangement according to any one of the preceding claims, **characterized in that** the clamping element (7) is secured by adhesion to the screwed insert (6) in a releasable manner, preferably by way of a double-sided adhesion element (40).

## Revendications

1. Agencement pour la fixation d'un profilé (3), en particulier un profilé creux, sur le toit d'un véhicule dans la zone d'un cadre de toit (5), s'étendant en dessous de la couverture de toit (1), la base (12) du profilé prenant appui contre la couverture de toit (1), au moins dans la zone autour de l'agencement, et un insert de vissage (6), fixé par rapport au cadre de toit (5), passe à travers une ouverture dans la couverture de toit (1) jusqu'à l'intérieur du profilé (3) et est muni à cet emplacement d'un tronçon fileté (21) en vue de sa fixation dans le profilé,
**caractérisé en ce que**
le tronçon fileté (21) de l'insert de vissage (6) est vissé à une plaque filetée (10), propre à être insérée dans le profilé (3) et prenant appui par le haut sur la base (12) du profilé, et **en ce que** l'insert de vissage (6) est muni d'une forure (29) cylindrique destinée à recevoir un élément de serrage (7) à action radiale, ainsi que de surfaces de contact (25) appropriées à l'application d'un outil de vissage extérieur.

2. Agencement selon la revendication 1, **caractérisé en ce que** les surfaces de contact (25) sont disposées dans une cavité (28) de l'insert de vissage (6), réalisée dans le prolongement de la forure (29) cylindrique.

3. Agencement selon la revendication 2, **caractérisé en ce que** les surfaces de contact (25) sont formées par une section non ronde, de préférence carrée de la cavité (28).

4. Agencement selon la revendication 2 ou 3, **caractérisé en ce que** l'insert de vissage (6), dans le sens longitudinal, est muni d'une ouverture débouchante, dont les tronçons longitudinaux sont formés par la forure (29) cylindrique et la cavité (28).

5. Agencement selon la revendication 1, **caractérisé en ce que** les surfaces de contact (25) ou d'autres surfaces de contact (25) sont réalisées à l'extérieur sur l'insert de vissage (6).

6. Agencement selon l'une quelconque des revendications précédentes, **caractérisé en ce que** la plaque filetée (10) est insérée de manière immobile en rotation dans le profilé (3).

7. Agencement selon la revendication 6, **caractérisé en ce que**, compte tenu de sa forme non ronde, la plaque filetée (10) est logée de manière immobile en rotation dans le profilé (3).

8. Agencement selon l'une quelconque des revendications précédentes, **caractérisé en ce que** l'insert de vissage (6) comporte un tronçon longitudinal (22) radialement élargi par rapport au diamètre dans le tronçon fileté (21), et **en ce que** la base (12) du profilé est serrée entre ce tronçon longitudinal (22) et la face inférieure de la plaque filetée (10).

9. Agencement selon la revendication 8, **caractérisé en ce que** le tronçon longitudinal (22) s'élargissant radialement est situé dans l'ouverture de la couverture de toit (1) et centre ainsi l'insert de vissage (6) par rapport à la couverture de toit (1).

10. Agencement selon l'une quelconque des revendications précédentes, **caractérisé en ce que** l'élément de serrage (7) à action radiale est prévu sous forme de manchon à expansion, à travers lequel passe un boulon (8), qui est immobile en rotation par rapport à l'insert de vissage (6) et qui, au niveau de son extrémité passant à travers une ouverture dans le cadre de toit (5), est muni d'un filetage (33) pour y visser un écrou fileté (14) prenant appui par le bas contre le cadre de toit (5), l'élément de serrage (7) pouvant se dilater sous l'effet d'un déplacement axial du boulon (8) dans la forure (29) cylindrique, résultant d'une action de vissage de l'écrou fileté (14), et pouvant être bloqué radialement contre ladite forure.

11. Agencement selon la revendication 10, **caractérisé en ce que** pour immobiliser en rotation le boulon (8), celui-ci est configuré en partie avec une forme non ronde et est logé de manière axialement mobile dans une cavité (28), avec une forme non ronde correspondante, de l'insert de vissage (6), ladite cavité (28) étant réalisée dans le prolongement de la forure (29) cylindrique.

12. Agencement selon la revendication 10 ou 11, **caractérisé en ce que** pour dilater l'élément de serrage (7), un cône (37) est réalisé sur celui-ci ou sur le boulon (8).

13. Agencement selon l'une quelconque des revendications précédentes, **caractérisé en ce que** l'élément de serrage (7) est collé de manière amovible à l'insert de vissage (6), de préférence par l'intermédiaire d'un élément adhésif (40) double face.
